# EUROPEAN PATENT SPECIFICATION

(11) **EP 3 964 865 B1**
(45) Date of publication and mention of the grant of the patent: **27.08.2025**
(21) Application number: 21195164.5
(22) Date of filing: 06.09.2021
(51) Int. Cl.: G01S 15/88, G01S 15/08, G01S 7/521, A61H 3/06, G01S 15/87

(54) **A SYSTEM FOR ASSISTING A BLIND OR LOW-VISION SUBJECT DISPLACEMENTS**
SYSTEM ZUR UNTERSTÜTZUNG EINER BLINDEN ODER SEHBEHINDERTEN PERSON BEI DER BEWEGUNG
SYSTÈME D'ASSISTANCE AUX DÉPLACEMENTS D'UN SUJET AVEUGLE OU MALVOYANT

(30) Priority: 04.09.2020 IT 202000021061
(43) Date of publication of application: 09.03.2022
(73) Proprietor: Università di Pisa, 56126 Pisa (IT); Radiometrics S.r.l., 56017 San Giuliano Terme (PI) (IT)
(72) Inventor: FORGIONE, Nicola, I-56126 PISA (IT); LEPORINI, Barbara, I-55100 LUCCA (IT); ROSELLINI, Michele, I-56017 San Giuliano Terme (PI) (IT); DEL GRATTA, Aldo, I-57016 Rosignano Marittimo (LI) (IT)
(74) Representative: ABM Agenzia Brevetti & Marchi

(56) References cited:
- DE-A1- 102008 039 153
- GB-A- 2 578 683
- JP-A- 2002 065 721
- US-A1- 2013 131 985

## Description

### Field of the invention

The present invention relates to a system for assisting the displacements of a partially or totally visually impaired subject. More in detail, the system is configured to detect obstacles that are arranged along his/her path, in particular obstacles that are located in a central low position along the subject's path and is also configured to notify the obstacles to the subject. In some exemplary embodiments, the system can notify to the subject also possible obstacles arranged laterally with respect to the subject, on the right or left side.

### Prior art - Technical problem

Several devices are known for assisting a walking blind or severely visually impaired subject. Most such devices are not specifically conceived to detect obstacles and to notify their presence. Actually, these devices use at least one video camera configured to receive a visual input, and a computer configured to extract useful messages for the subject from the visual input undifferentiatedly received from the video camera. Recognizing the obstacles requires raffinate and expensive analytic techniques that, however, are not always able to provide a fast recognition of the obstacle, despite their high implementation cost.

Such are for instance the devices and the methods described in WO 2016/034999 A1 and in US 2019/167131 A1, which also have the drawback of intensively engaging the auditory channel, which is essential for a blind or low-vision subject to autonomously perceive the surrounding reality.

However, devices also exist using a more specific means for detecting obstacles, such as ultrasound or infrared beams. In particular, a device known as iGlasses is manufactured by Ambutech company and comprises a pair of eyeglasses on which two ultrasonic sensors are integrated in order to detect obstacles. The presence of the obstacles is notified to the user through vibrations. However, this device can detect neither low obstacles arranged in front of the subject, nor obstacles at a distance of more than 3 metres from the subject, which makes the device not so well-suited for outdoor use. Moreover, this device cannot provide the subject with direction instructions. Other devices, such as the so-called Lions Electronic Cane, comprises a cane as those normally used by blind or visually impaired people, and a vibrotactile actuator. An infrared sender/receiver for detecting obstacles at a distance up to 8 metres, and the vibrotactile actuator are arranged at the tip and in the handle of the cane, respectively. The vibrotactile actuator serves for notifying the detected obstacles to the person by vibrations. The vibration features are selected responsive to the distance of the obstacle from the subject. However, such a device cannot provide data about the left or right position of the obstacle, nor can it provide direction or auxiliary data.

US2013131985 (A1) discloses a system comprising a wearable, electronic image acquisition and processing system, or visual enhancement system to guide visually impaired individuals through their environment, providing them information about nearby objects of interest, potentially dangerous obstacles, their location, and potential paths to their destination.

DE 10 2008 039 153 A1 describes a visual aid in which a device can provide a representation of an environment surrounding a blind or low-vision user, said representation including the distances of objects detected in respective angular fields of the environment. A tactile device is configured to reproduce this representation at different points of a user's extended skin area.

GB 2578683 describes a wearable object detector for use by visually impaired people, comprising a distance determination device configured to transmit a signal and for receiving a return signal responsive to a detected object and to the distance thereof from the device; a processor for converting the return signal into a vibration signal having a frequency that monotonously increases as the distance decreases; a transducer to generate vibrations that can be interpreted by the person, in particular acoustic vibrations, starting from the vibration signal. The device can be configured to define one or more distance range systems and for associating to each distance range of a system a respective frequency of the vibration signal, and preferably for dividing each distance range into a plurality of angular fields, associating a distinguishing feature of the signal to each angular field.

The need is felt of a system for recognizing objects that can be present along the path of a blind or low-vision person, in particular for recognizing possible obstacles against which the blind or low-vision person can stumble, and for notifying the presence of said objects or obstacles to the blind or low-vision person. The above-mentioned devices projecting a signal downwards, for example an ultrasound signal, have the drawback that they are not able to distinguish the return signal or echo coming back from the possible object/obstacle protruding from the ground from the return signal coming from back the ground itself. None of the above cited documents takes this problem into account.

### Summary of the invention

It is therefore an object of the present invention to provide a system for detecting and notifying to a blind or low-vision subject the presence of possible obstacles, or of objects against which the subject can stumble, protruding from the ground along the subject's path, without any interference of return signals coming from the ground surrounding the subject.

It is a particular object of the invention to provide such a system for communicating to the subject the presence of obstacles that can be present in both a front low position and front-right or front-left position with respect to the subject, distinguishing these positions when notifying their presence.

It is also a particular object of the invention to provide such a system that is well-suited for use in both an outdoor and an indoor environment.

It is also a particular object of the invention to provide such a system that is well-suited for use in both a crowded place and in a poorly peopled place.

It is also an object of the invention to provide such a system that does not require the subject to wear any special support, i.e. any other object than the equipment commonly worn or used by a blind or low-vision subject.

It is also an object of the invention to provide such a system that allows both guiding a partially or totally visually impaired subject towards a predetermined destination, and providing the subject with obstacle data related to the presence of various obstacles along her/his path.

It is another particular object of the present invention to provide such a device that does not engage the subject's auditory channel to receive obstacles notifications or data about the direction to be followed in a path towards a predetermined destination.

These and other objects are achieved by a system for assisting a blind or low-vision subject's displacements as described in independent claim 1. Exemplary advantageous embodiments of the system are defined in the dependent claims.

A system for assisting a blind or low-vision subject's displacements, according to the invention, is disclosed in claim 1.

Therefore, the system is configured to continuously detect distance values of a body included in the emission cone. This body can be the horizontal ground, or a possible obstacle protruding from the ground and having therefore at least one non-horizontal portion. As long as the system, or more in detail the control unit, receives distance values that can be associated to the ground, no signal is transferred to the blind or low-vision subject. When detected distance value suddenly deviates from a value that can be recognized as the sensor-ground distance, the control unit notifies this event to the subject by a sensory stimulation through the sensory stimulation device. This way, the proximity front obstacles, in particular the low obstacles, can be successfully measured and timely and selectively notified to the user, thus overcoming a common drawback of most prior art devices.

In particular, if no obstacle is present, the ultrasound randomly reflected by the ground as backscattered ultrasound provides a substantially steady signal. On the contrary, if an obstacle is present, a sudden change occurs in the received signal when the obstacle enters the emission cone as the subject advances. In fact, such a reflected backscattered ultrasound, instead of being dispersed in the surrounding environment, is further reflected on the surface of the obstacle and modifies the echo generated by the obstacle towards the distance sensor.

In particular, in comparison with DE 10 2008 039 153 A1 and GB 2578683 A, which provide to a blind or low-vision subject a scenario and a signal proportional to the distance of an object, respectively, by the present invention the user is no longer afflicted by unnecessary distance signals as long as no significant soil unevenness is encountered along his/her path such as an obstacle, an object against which the subject can stumble, a depression or a hole.

To this purpose, advantageously, the control unit is configured to perform an initial calibration step immediately after switching the device on, in order to determine an average distance between the ground and the ultrasonic distance sensor, said calibration step comprising:
- a plurality of steps of repeatedly reading a distance of a portion of the ground included in the emission cone, wherein said steps of reading are repeated as long as corresponding read ground distance values are not included in a predetermined range centred about a central value;
- storing the central value as an average distance between the ground and the ultrasonic distance sensor;
- storing a tolerance range selected between:
   - the amplitude of the above-defined range;
   - a tolerance range defined in such a way to include the size of possible objects lying on the ground that do not form an obstacle for the blind or low-vision subject.

In particular, the control unit can be configured to perform a step of detecting and notifying an obstacle, comprising the iterative steps of:
- receiving a distance value of a body included in the emission cone detected by the distance sensor;
- comparing the detected distance value with a range defined by the tolerance range about the average distance;
   - if the distance detected is within said range, repeating the step of receiving and the step of comparing;
   - if the detected distance is external to said range, generating the electric distance signal as a control signal for the sensory stimulation device, and operating the sensory stimulation device by the electric distance signal.

The elevation angle is preferably set between 15° and 75°, more preferably between 30° and 75°, even more preferably between 40° and 70°.

For example, the adjustment means can include a hinge with a fixed part integral to the support and a rotatable part rotatably mounted to the fixed part and integral with the distance sensor. The adjustment means includes a lock device, for example a screw lock device, for blocking the sensor at a predetermined angle with respect to the support. In different exemplary embodiments, the distance sensor is configured to emit the ultrasound at a predetermined angle with respect to the sensor, without changing the orientation of the sensor with respect to the support.

This way, in comparison with a device using a simple distance signal filter to cut off values higher than a predetermined threshold value, this system makes it possible to detect more accurately such obstacles as objects against which the subject can stumble, ascending and descending shallow steps, branches, protruding roots, holes and the like, and to notify them to the user.

The wearable support leaves the subject's hands free. Therefore, the system can be used without giving up other well-known mobility aids for blind or low-vision people, such as a dog or a blind stick.

The control unit can be configured to inhibit the operation of the sensory stimulation device and can therefore prevent the transfer of a sensory stimulation to the subject when the distance calculated by the control unit is longer than a predetermined value. Advantageously, the system comprises a detection distance switch device of the distance sensor configured to modify the detection distance between 0.5 metres and 3.5 metres, in particular between 1 meter and 3 metres. Preferably, this switch device is configured to modify the detection distance of the distance sensor by steps of 0.5 metres.

This adjustment capability, along with the possibility of adjusting the emission elevation angle, for instance, by more or less rotating downwards the distance sensor, allows the user to identify the optimal configuration according to his/her height and needs without requiring any external help.

Even if this a "horizontal reference axis" is systematically referred to in this description, a horizontal reference plane containing the reference axis is also encompassed by this definition.

In an advantageous exemplary embodiment, the ultrasonic distance sensor is a first ultrasonic distance sensor, the emission direction is a first emission direction, the emission elevation angle is a first emission elevation angle and the sensory stimulation device is a first sensory stimulation device, and a second ultrasonic distance sensor is also provided arranged to be mounted to the support and having a second emission direction.

In particular, the second emission direction is oriented towards the upper portion of the support, according to a predetermined second emission elevation angle with respect to the reference axis, which also is preferably set between 15° and 75°. This way, high-elevation obstacles can be detected and notified to the subject, such as arches, lintels, archways, or laterally-protruding obstacles.

As an alternative, or in addition, this second emission direction is substantially parallel to the horizontal reference axis of the support. This way, the device can detect and notify to the user obstacles farther than the obstacles that can be detected by the first distance sensor, in particular the device can detect obstacles at a detection distance set between 1 and 8 metres. Preferably, the system has an adjustment means for selecting the detection distance, in particular, by predetermined steps, wherein the detection distance is selected among 1, 2, 4 and 8 metres.

Obviously, in any case the second sensor, regardless the orientation thereof, is configured to emit ultrasound along the second emission direction and to receive an echo of the ultrasound when the emitted ultrasound is reflected back by an object present in a second emission cone of the second distance sensor at a distance from the second distance sensor, and the control unit is configured to receive a signal of the echo from the second ultrasonic distance sensor; to find out a delay between the emission of the ultrasound and the reception of the eco; to calculate the distance of the object from the second ultrasonic distance sensor starting from the delay; to generate a distance signal according to the calculated distance, and a second sensory stimulation device is preferably provided configured to receive the distance signal and to transmit a sensory stimulation to the subject, responsive to the distance signal.

Preferably,
- the support is configured to be worn symmetrically on the user's head, for example the support can be a headpiece, a headset, a support configured to be connected to a pair of eyeglasses or directly a pair of eyeglasses,
- the distance sensor previously defined is a central-emission distance sensor for detecting an obstacle in a central low position with respect to the subject, and
- the system also comprises at least one pair of laterofrontal-emission ultrasonic distance sensors configured to emit ultrasound along respective left-side and right-side second emission directions and to receive an echo of the emitted ultrasound when the latter is reflected back by an object present in one emission cone of respective emission cones of the laterofrontal-emission ultrasonic distance sensors, so as to detect obstacles that are arranged laterally with respect to the subject at a distance beyond the distance field defined by the central-emission distance sensor,
and the control unit is configured to:
- receive a signal of said echo from the laterofrontal-emission distance sensors;
- find out a delay between the emission of the ultrasound and the reception of the eco;
- calculate the distance of the object from one of the laterofrontal-emission ultrasonic distance sensors starting from the delay;
- generate a distance signal according to the calculated distance,
wherein the system also comprises at least one pair of lateral sensory stimulation devices associated with respective laterofrontal-emission ultrasonic distance sensors, such devices configured to receive said distance signal and to transmit a sensory stimulation to said subject responsive to said distance signal and being preferably configured to mounted to the support, so as to be arranged opposite to each other with respect to the subject's mid-sagittal plane, when the support is worn by the subject.

This way, the device can distinguish obstacles that are located at front-right position from obstacles that are located at a front-left position with respect to the user, i.e. with respect to the mid-sagittal plane of the latter, which defines the conveying direction of the subject itself.

Advantageously, the system comprises a distance-field switch device that is configured to modify said distance field that can be observed by the laterofrontal-emission distance sensors, so as to adapt the system to different environment conditions, for instance, an indoor or outdoor environment, and/or a more or less peopled environment, and/or an environment where obstacles or in any case ground unevennesses are expected at a shorter or longer distance from one another. In addition, or as an alternative, the system comprises a power switch unit to switch off the laterofrontal-emission distance sensors, for use, in particular, in a closed and, more in particular, crowded environment.

In an exemplary embodiment, the support can be a pair of eyeglasses, which is therefore a part of the system itself. This way, the system can be used without wearing a specific support, but exploiting a component that is normally in use by blind or low-vision people, without introducing additional discomfort.

The same advantage is also obtained by another exemplary embodiment, in which the support is configured to be connected to a pair of eyeglasses, in other words the system comprises a support that is a kit i.e. a connection portion for a pair of eyeglasses. In this case, the further advantage is obtained of leaving the user free to choose the pair of eyeglasses, in particular a low-vision subject can put on a pair of eyeglasses comprising the lens best-suited for his/her condition. Moreover, in case of failure, only the faulty part of the system instead of the whole system must be replaced.

In the case of a system in which the support is a pair of eyeglasses or a kit to be mounted to a pair of eyeglasses, preferably, the laterofrontal-emission ultrasonic distance sensors are arranged at respective temples of the pair of eyeglasses, while the central-emission distance sensor can be arranged at the bridge or at the nose support of the pair of eyeglasses, or also at one of the temples of pair of eyeglasses, in which case the central-emission distance sensor is preferably made as a single unit together with the corresponding laterofrontal-emission ultrasonic distance sensor. This way, less components must be mounted on the pair of eyeglasses, which makes the system easier to be assembled and less invasive for the user.

Still in this case, preferably, the sensory stimulation device and/or the lateral sensory stimulation devices are configured to be integrally mounted to the pair of eyeglasses, in particular the sensory stimulation device is configured to be mounted to a bridge of the pair of eyeglasses, and the lateral sensory stimulation devices are configured to be mounted to respective temples of the pair of eyeglasses. This way, the sensory stimulation devices are located at sensory-stimulation particularly sensitive positions. This way, the obstacle detection and notification process by the system is more likely to be successful, even if low-intensity stimulation forces are used.

Advantageously, the distance sensor and the sensory stimulation device are housed in a common housing. In an exemplary embodiment, the control unit is arranged in one of the housings where one of the laterofrontal-emission sensors is housed. As an alternative, the control unit can be housed in a box different from the housing of the sensors, said box arranged to be attached to a user's garment or to be put into a pocket thereof. With such solutions, the number of components to be mounted to such a support as the pair of eyeglasses is reduced, which makes the system to be mounted and less discomfortable to be used.

Preferably, the sensory stimulation device is a tactile device, in particular a vibrotactile device, or also a thermal stimulation device. This way, the user's auditory channel is left free, which is essential for a visually impaired subject in order to independently perceive the surrounding reality, or in any case the auditory channel is available to receive other messages than obstacle notifications.

Moreover, the system can include further lateral direction sensory stimulation devices.

In particular, a pair of further lateral direction sensory stimulation devices can be provided that are arranged in lateral positions different from the lateral sensory stimulation devices associated with the laterofrontal-emission ultrasonic distance sensors, wherein the control unit is configured to receive a direction signal and to transfer the direction signal to the lateral direction sensory stimulation devices configured to transmit a sensory stimulation to the subject responsive to the direction signals.

In particular, the control unit includes a Blueetooth communication unit configured to connect with a portable communication device such as a smartphone or a smartwatch, in which a guide program is resident for assisting a blind or low-vision person's displacements, configured to deliver direction signals, in order to bring the blind or low-vision person from a current location to a predetermined destination. This way, the system can operate in "navigation" mode, i.e., it can guide the blind or low-vision subject, besides notifying obstacles, in which case at least two different devices are required till now.

Preferably, the pair of further lateral direction sensory stimulation devices is arranged at the rear part of the temples of the pair of eyeglasses, close the ears.

As an alternative, or in addition thereto, a pair of "earphones", can be provided, preferably bone-conduction earphones, in order not to engage the properly said auditory channel, wherein the control unit is configured to generate a status signal of the system and to transfer the status signal to the earphones that are arranged in such a way to communicate status data of the system to the subject.

The pair of earphones can also be used by the guide program to provide detailed data of a place of interest.

A system for assisting a blind or low-vision subject's displacements, not a part of the invention, comprises:
- a support configured to be worn by the subject;
- a sensory stimulation device configured to receive a direction and/or an obstacle distance signal for the subject and to transmit a sensory stimulation to the subject responsive to the direction and/or distance signal, wherein the support is selected from the group consisting of:
   - a support configured to be connected to a pair of eyeglasses;
   - a pair of eyeglasses;
   wherein the main feature of the system is that the sensory stimulation device is configured to be arranged integrally to the pair of eyeglasses, and to transfer said sensory stimulation to the user through the pair of eyeglasses.

This way, the system can be used without wearing a specific support, but using a component that is normally used by blind or low-vision people, without additional discomfort. Moreover, a support that can be fixed to any pair of eyeglasses leaves the user free to choose his/her pair of eyeglasses.

In particular, the system also comprises lateral sensory stimulation devices, and the sensory stimulation device is configured to be connected to a bridge of the pair of eyeglasses, whereas the lateral sensory stimulation devices are configured to be connected to respective temples of the pair of eyeglasses. This way, the sensory stimulation devices are located at particularly sensitive sensory-stimulation positions. Accordingly, the obstacle detection and notification process by the system is more likely to be successful, even if low-intensity stimulation forces are used.

In particular, this system is the system described above in connection with the invention, i.e. it can include one feature or multiple features as described in connection with the system according to the invention.

### Brief description of the drawings

The invention will be now shown with the description of some exemplary embodiments, exemplifying but not limitative, with reference to the attached drawings, in which the same reference characters designate the same or similar parts, throughout the figures of which:
- Fig. 1 is a diagrammatical view of a system according to the invention;
- Fig. 2 is an enlarged view of the system of Fig. 1;
- Fig. 3 is a block diagram of the system of Fig. 1;
- Fig. 4 is a diagrammatical view of a system according to an exemplary embodiment of the invention, comprising a further distance sensor with an upward emission direction, when worn by a subject;
- Fig. 5 is an enlarged view of the system of Fig. 4;
- Fig. 6 is a diagrammatical view of a system according to an exemplary embodiment of the invention, comprising a further distance sensor with a substantially horizontal emission direction of the support, when worn by a subject;
- Fig. 7 is an enlarged view of the system of Fig. 6;
- Fig. 8 is a block diagram of the systems of Figs. 3 and 4;
- Figs. 9 and 10 are diagrammatical views of systems according to corresponding preferred exemplary embodiments of the invention, in which two right and left laterofrontal-emission ultrasound sensors are provided;
- Fig. 11 is a block diagram of the system of Figs. 9 and 10;
- Fig. 12 is a block diagram of a system according to another exemplary embodiment of the invention, in which additional sensory stimulation devices are provided to carry out a direction mode to guide the subject or a communication mode to communicate different data;
- Fig. 13 is a diagrammatical view of a system according to the exemplary embodiment of Fig. 12;
- Fig. 14 is a diagrammatical view of a system according not a part of the invention;
- Fig. 15 is a diagrammatical view of a system according to an exemplary embodiment of the system of Fig. 14.

### Description of preferred exemplary embodiments

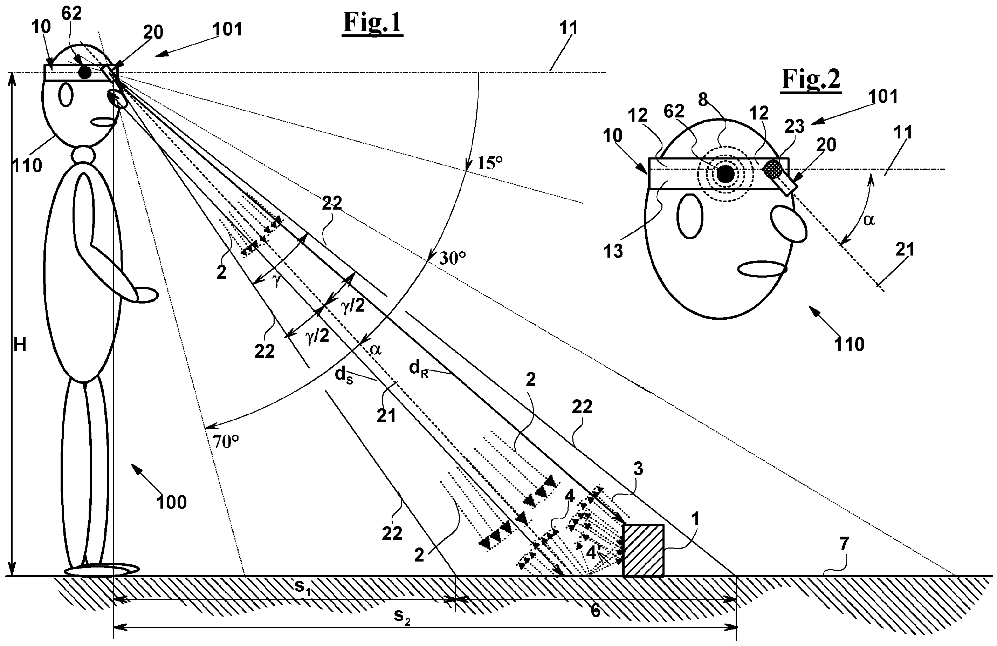

With reference to Figs. 1-3, a system 101 is described for assisting a blind or low-vision subject's displacements 100.

Among its essential components, system 101 comprises a support 10 configured to be worn by subject 100. In a standing position of subject 100, a horizontal direction is defined that is the direction of a reference axis 11 integral to the support, and upper and lower portions 12, 13 (Fig. 2) of support 10 are also defined with respect to reference axis 11. Even if this a "horizontal reference axis" 11 is generally referred to in this description, a horizontal reference plane containing reference axis 11 is also encompassed by this definition.

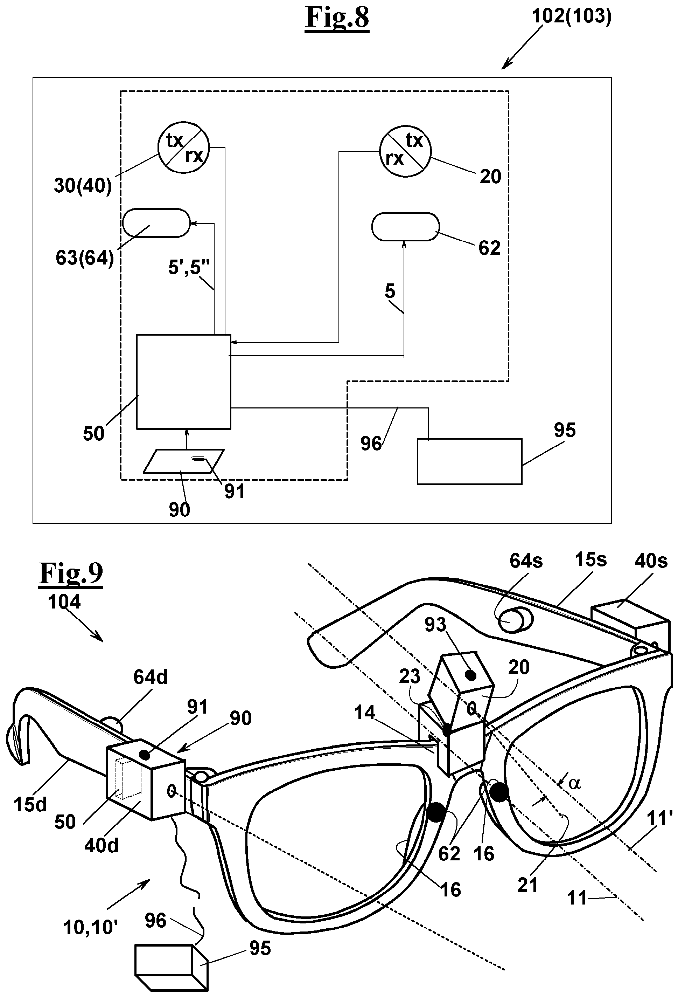

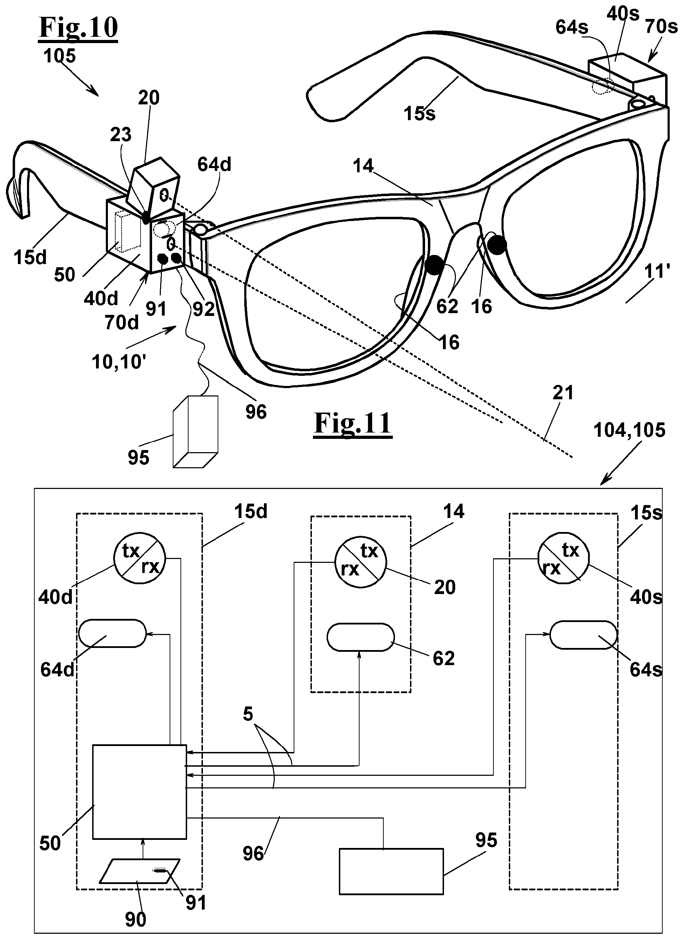

In Figs. 1, 2 and 4-7 a system is shown, according to the invention, comprising a generic support 10 that can be worn on subject's 100 head 110. Support 10 is preferably a pair of eyeglasses, but it can also be a headpiece, for example a helmet, a headset 110, a forehead belt and the like. With reference to Figs. 9 and 10, an exemplary embodiment will be described in which support 10 is a pair of eyeglasses or, more advantageously, a portion or kit to be mounted so as to fasten the components of the system to a pair of eyeglasses 10'.

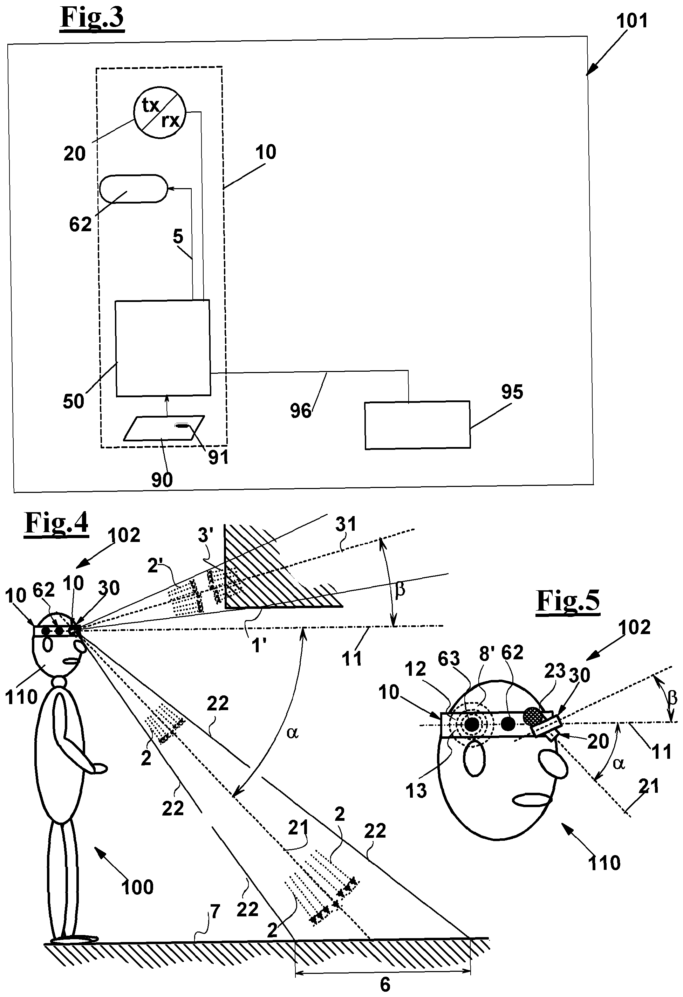

System 101 comprises at least one ultrasonic distance sensor 20 that includes an emission portion tx (Fig. 3) configured to emit ultrasound 2 within an emission cone 22 having a predetermined opening angle γ, and whose axis identifies an emission direction 21 of ultrasound 2.

Distance sensor 20 is arranged to be mounted to support 10 with its own central emission direction 21 (Figs. 1 and 2) oriented towards lower portion 13 of support 10, i.e., oriented downwards, when support 10 is worn by subject 100 along with distance sensor 20, according to a predetermined emission elevation angle α with respect to reference axis 11, preferably set between 15° and 75°, in particular between 30° and 75°, more in particular, between 40° and 70°.

This way, emission cone 22, whose axis has the same direction as central emission direction 21, defines a ground portion on ground 7, said ground portion comprised in a distance field 6 of distances from subject 100 that is "lighted" by ultrasound 2 coming from distance sensor 20. This distance field is defined once the height H of sensor 20 from ground 7 is known, once the sensor has been worn by subject 100, once opening angle γ of emission cone 22 is known, and once elevation angle α has been chosen. More in detail, the distance field is defined by a minimum distance s₁ = H tan [π-(α+½γ)] and a maximum distance s₂ = H tan [π-(α-½γ)].

For example, emission cone 22 can have an opening angle γ set between 10° and 20°, in particular an opening angle of 15°.

The system comprises an adjustment means 23 for adjusting elevation angle α. As shown in Fig. 2, this means can comprise a hinge whose fixed part is integral to the support and whose rotatable part is integral to distance sensor 20, and comprises a lock device such as a screw lock device for blocking distance sensor 20 at a predetermined emission elevation angle α with respect to the support.

Adjustment means 23 enables user 100 to adjust distance field 6, according to its own height and, accordingly, to the height from ground H of distance sensor 20 of device 101, once the device has been worn.

Distance sensor 20 also includes a reception portion rx for receiving ultrasound, i.e., for receiving an echo 3,4 (Fig. 1) of ultrasound 2 emitted by emission portion tx when this ultrasound is reflected back by a body that is present within emission cone 22. In particular, Fig. 1 shows echo 4 reflected by ground portion 7 defined by emission cone 22, as well as echo 3 reflected by object 1 protruding from ground portion 7, which can form a proximity front obstacle in a low position with respect to subject 100.

By selecting the inclination angle, subject 100 can therefore select the distance field [s₁,s₂], from which he/she will receive signals notifying the presence of possible obstacle 1 protruding from ground 7 in advance enough, according to his/her own advancement speed.

The ultrasonic distance sensor can be a conventional sensor such as a 5 m MaxBotix MB1003 HR-LV-MaxSonar-EZ0 sensor working at a frequency of 42 kHz, whose size is suitable for application on a support 10 to be worn on head 110, for example a pair of eyeglasses, without causing discomfort to user 100.

The system also comprises a sensory stimulation device 62, preferably a tactile device and, in particular, a vibrotactile device. For example, sensory stimulation device 62 can be Precision Microdrives Pico-Drive 303-102 actuator, whose small size (12 mm) makes it suitable for application on support 10 to be worn on head 110, such as a pair of eyeglasses, without causing discomfort to user 100. The sensory stimulation device is preferably arranged on support 10, even if can be arranged somewhere else, provided its position allows a stimulation tactile to be transferred to user 100.

It is a part of the system also a processing unit or control unit 50, not shown in Figs. 1 and 2 but shown in the block diagram of Fig. 3. The basic functions of control unit 50 consist in detecting a signal of echo 3,4 received by distance sensor 20, and in processing the delays of echoes 3,4 with respect to ultrasonic 2 emitted by the distance sensor in the form of electric levels, in order to control sensory stimulation device 62.

More in detail, control unit or processing unit 50 is configured to determine a delay between the emission of ultrasound 2 and the reception of echo 3,4, to calculate the distance of object 1 and/or ground 7 from distance sensor 20 by this delay, and to generate an electric distance signal 5 according to the calculated distance.

As shown in Fig. 3, device 101 also comprises a user interface 90 including a key 91 for turning the system on and off. Preferably, user interface 90 including key 91 is arranged on the common housing of distance sensor 20 and of sensory stimulation device 62.

User 100 can act on power key 91 or in any case operate device 101, advantageously, after arranging device 101 in its position, i.e. at height H from ground 7.

Control unit 50 is configured to detect a background echo 4 associated with a reflection of emitted ultrasound 2 by ground 7, and to provide a sensory stimulation 8 to subject 100 when a further echo 3 is detected coming from an object 1 possibly present within emission cone 22, arranged as a proximity front obstacle in a low position with respect to blind or low-vision subject 100 wearing and using system 101.

More in detail, to this purpose, control unit 50 is configured to perform, after turning on device 101, an initial calibration step in which the distance d_{S} of ground 7 from distance sensor 20 is determined. The calibration step is preferably carried out while user 100 remains motionless in an environment in which ground 7 is regular enough, i.e., in which no elements protruding from the ground are present. The calibration step comprises a sequence of repeated readings of distance d_{S} that is preferably continued until the read values of distance d_{S} do not change remarkably with respect to one another, i.e. as long as these values are not included in a range about a central value, which is taken as the average distance d_{S} of the ground from distance sensor 20.

The calibration step ends with a step of storing nominal distance d_{S} and a tolerance range ±ε. Tolerance range ±ε can also be deduced by the distribution of the distance values of ground 7 as measured about the average value, or can be a predetermined tolerance range selected taking into account the size of possible objects lying on ground 7 and small enough to not form an obstacle and to not cause blind or low-vision subject 100 to stumble.

Once the calibration step over, control unit 50 is configured to perform a step of detecting and notifying an obstacle. Control unit 50 can be configured to automatically perform the step of detecting the obstacles, once the calibration step is over, or it can be configured to receive an input from user 100 to perform the step of detecting and notifying the obstacles.

More in detail, control unit 50 is configured to perform a plurality of cycles comprising the steps of:
- receiving a distance value d_{R} detected by distance sensor 20;
- comparing said detected distance value d_{R} with a range [d_{S}-ε, d_{S}+ε] about the average distance d_{S} of ground 7, and determined during the calibration step.

If the detected distance d_{R} lays within this range, i.e., if d_{S}-ε < d_{R} < d_{S}+ε, control unit 50 is configured to perform a further cycle with a new distance value d_{R} detected by distance sensor 20.

On the contrary, if the comparison step indicates that d_{R} > d_{S}+ε or d_{R} < d_{S}-ε, in a cycle or in a predetermined number of consecutive cycles, the control unit is configured to generate an electric distance signal 5 as a control signal for sensory stimulation device 62, thus actuating sensory stimulation device 62.

In particular, electric distance signal 5 can have an intensity inversely dependent on a distance d_{R} that can be recognized and notified as the distance between an object 1 protruding from ground 7 and distance sensor 20, i.e., as the distance of a possible obstacle for walking blind or low-vision subject 100 when d_{R} < d_{S}-ε, or that can be recognized and notified as the depth of a depression or of a hole of ground 7, not shown, when d_{R} > d_{S}+ε.

In this case, sensory stimulation device 62 is configured to receive electric distance signal 5 and to transmit a sensory stimulation 8 responsive to the value of electric distance signal 5. For instance, if sensory stimulation device 62 is advantageously a vibrotactile device, the latter can be configured to emit a vibration whose frequency and/or intensity is directly dependent on the intensity of electric distance signal 5, which in turn is inversely dependent on the distance of object 1 from distance sensor 20, so that subject 100 will receive a vibrating stimulation, the lower his/her own distance from object 1, the higher frequency and/or intensity of the vibrating stimulation.

Fig. 1 also shows that one part of ultrasound 4' that is randomly reflected as backscattering 4' by ground 7 in response to emitted ultrasound 2 contributes to the sudden change of echo 3 generated by object 1, i.e., by a possible obstacle, when the latter, as subject 100 advances, enters emission cone 22 of ultrasound 2. Actually, backscattered ultrasound 4', instead of being mostly dispersed in the environment, is further reflected on the surface of obstacle 1, thus reinforcing echo 3 that the obstacle generates towards distance sensor 20. Echo 3 directly generated by the obstacle formed by object 1 is added to this backscattered ultrasound.

Preferably, distance sensor 20 and sensory stimulation device 62 are housed in a common housing, as shown in Figs. 9 and 10 and described hereinafter.

Still with reference to Fig. 3, system 101 also comprises a battery supply unit 95 connected to processing unit or control unit 50 by a feeding cable 96. Feeding unit 95 is preferably housed in a container, not shown, which is configured to move to a pocket of user 100 or attacked to a dress with a special clip.

System 101 can advantageously comprise a detection distance switch device 93 configured to modify a detection distance range of distance sensor 20, in which detection distance d_{R} can be detected, in particular, between 0.5 metres and 3.5 metres, more in particular, between 1 m and 3 m. Detection distance switch device 93 can be arranged on a box of detection sensor 20, as shown in Fig. 9, or on the housing of control unit 50, and can be configured as a key or as a knob. Preferably, detection distance switch device 93 is configured to modify a detection distance range by steps of 0.5 metres.

With reference to Figs. 4-8, systems 102,103 are described according to respective exemplary embodiments of the invention, for detecting and notifying to a subject 100 the presence of obstacles or bodies 1',1" that are proximity high front obstacles and obstacles at a distance longer than the obstacle that can be detected by distance sensor 20. Each system 102,103 comprises a further ultrasonic distance sensor 30 and/or 40 arranged to be mounted to support 10 with a second emission direction 31,41.

In system 102 of Figs. 4 and 5, further distance sensor 30 is arranged on support 10 so that its own emission direction 31 is oriented towards upper portion 12 of support 10, according to a predetermined second emission elevation angle β with respect to reference axis 11. In other words, further distance sensor 30 is arranged so that its own central emission direction 31 is oriented upwards, when support 10 with distance sensor 20 is worn by subject 100, according to a predetermined emission elevation angle β with respect to the horizontal. Elevation angle β is preferably set between 15° and 75°. Even in this case, an adjustment means, not shown, can be provided to adjust elevation angle β, for instance, of the same type as the means described in connection to distance sensor 20. This configuration is used for detecting, besides proximity low front obstacle 1, proximity front obstacles or bodies 1' that are located in elevation with respect to subject 100, for example, protruding bodies such as shelves, or lintels, arches, archways or the like.

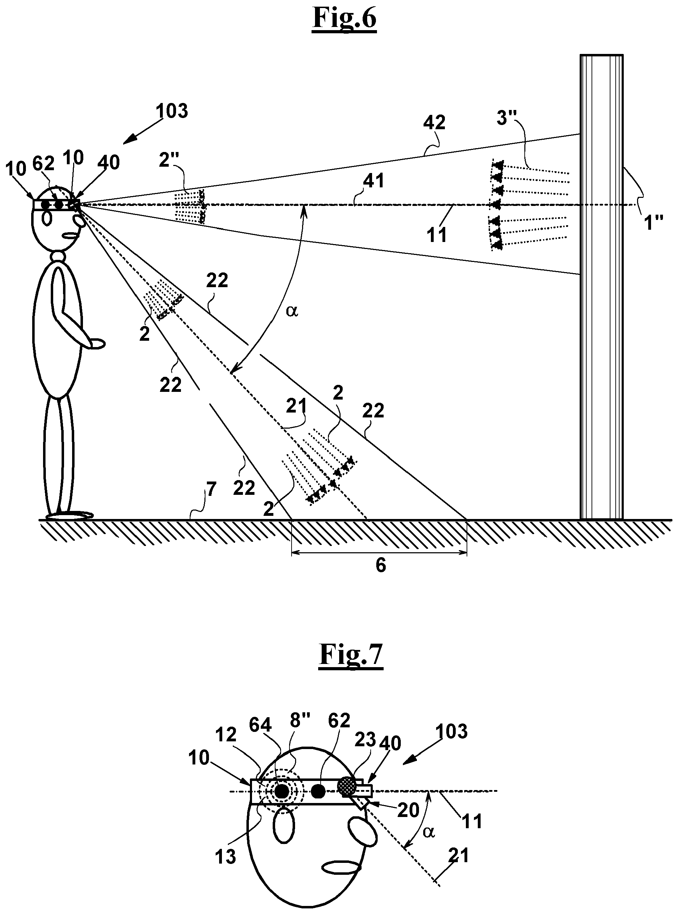

In system 103 of Figs. 6 and 7, further distance sensor 40 is arranged on support 10 so that the emission direction is oriented the same way as reference axis 11 of support 10, i.e., it is substantially horizontal, when support 10 with distance sensor 20 is worn by subject 100. This configuration is useful to detect obstacles or bodies 1", such as posts or shafts, at a longer distance than the objects that can be detected by base sensor 20, i.e., for example, at a distance between 2 and 8 metres.

Preferably, in systems 102,103, a second sensory stimulation device 63, 64 is also provided for notifying the distances detected through ultrasonic distance sensors 30,40, respectively, to subject 100;

Fig. 8 shows a block diagram of systems 102,103 of Figs. 4-7, each including two sensors 20,30 or 20,40. Even in this case, processing unit or control unit 50 is configured to detect a signal of the echo received from distance sensors 30,40, as well as from previously-described distance sensor 20, and to process the delays of the echoes sent by second distance sensors 20,30 and/or 40 in the form of electric levels, in order to control sensory stimulation devices 62 and 63 and/or 64. More in detail, control unit or processing unit 50 is also configured to determine a delay between the emission of ultrasound 2' and/or 2" and the reception of the respective echoes 3' and/or 3", to calculate the distance of object 1' and/or 1" from distance sensor 30 and/or 40 starting from this delay, and to generate electric distance signals 5' and/or 5" according to the calculated distance. These distance signals 5' and/or 5" are control signals for second sensory stimulation device 63 and/or 64. In particular, also electric distance signals 5', 5" have an intensity inversely dependent on the distance of object 1',1" from second distance sensors 30,40. Fig. 8 can be extended in an obvious way to exemplary embodiments where both upwards-oriented distance sensor 30 and horizontally oriented distance sensor 40 are present.

Similarly to what described for device 101 of Fig. 1, also devices 102,103 comprise user interface 90 with a key 91 for turning on and off the system, as well as a battery supply unit 95, as shown still in Fig. 8.

With reference to Figs. 9-11, systems 104,105 are described, according to respective exemplary embodiments of the invention, for detecting and notifying to a subject 100 the presence of obstacles or bodies 9d, 9s arranged laterally in elevation with respect to subject 100, such as walls, columns, door uprights and the like. Each system 104,105 comprises laterofrontal-emission ultrasonic distance sensors 40d,40s configured to detect objects at a distance longer than a maximum distance s₂ of distance field 6 of distance sensor 20 to projection central.

In system 104, respective lateral sensory stimulation devices 64d,64s are preferably associated to laterofrontal-emission ultrasonic distance sensors 40d,40s.

In particular, both laterofrontal-emission ultrasonic distance sensors 40d,40s and lateral sensory stimulation devices 64d,64s are mounted to support 10, in such a way to be arranged opposite to each other with respect to the subject's 100 mid-sagittal plane when support 10 is worn by subject 100. In an exemplary embodiment of Figs. 9 and 10, both laterofrontal-emission ultrasonic distance sensors 40d,40s and lateral sensory stimulation devices 64d,64s are arranged at respective temples 15d,15s of a pair of eyeglasses 10.

In system 104 of Fig. 9, central-emission distance sensor 20 is arranged in a central position of the frame of pair of eyeglasses 10, in this case at bridge 14 of the frame. Instead, in system 105 of Fig. 10 central-emission distance sensor 20 is made integral to one of laterofrontal-emission ultrasonic distance sensors 40d,40s, for example integral to right laterofrontal-emission ultrasonic distance sensor 40d, and it is therefore arranged laterally with respect to the frame of pair of eyeglasses 10 as well.

In any case, central sensory stimulation device 62 is preferably arranged to cause nose pads 16 of pair of eyeglasses 10 to vibrate, whereas lateral sensory stimulation devices 64d,64s can be arranged in such a way to cause temples 15d,15s to vibrate.

Moreover, in system 105 of Fig. 10, right and left laterofrontal-emission distance sensors 40d,40s are housed in a same housing 70d, 70s with right sensory stimulation device 64d and with left sensory stimulation device 64s, respectively. In the case shown, housing 70d of right sensor 40d and of right sensory stimulation device 64d is common to central-emission distance sensor 20 as well. However, exemplary embodiments are obviously possible, not shown, in which central-emission distance sensor 20 is arranged at bridge 14, while right and left sensory stimulation devices 64d,64s are arranged in right and left housings 70d, 70s, respectively, or in which central-emission distance sensor 20 is made integral to one of laterofrontal-emission distance sensors 40d,40s, while right and left sensory stimulation devices 64d,64s are located in a position of temples 15d,15s at a distance from right and left housings 70d, 70s, respectively.

System 104, 105 advantageously comprises a detection distance switch device, not shown, for modifying the detection distance field, i.e., the distance field that can be observed by laterofrontal-emission distance sensors 40d,40s. In particular, this detection distance switch device is configured to adjust the sensitivity of laterofrontal-emission distance sensors 40d,40s, in order to modify the observable distance in a range between 1 metre and 8 metres, or between 2 metres and 8 metres. In this case, control unit 50 is also configured to receive a sensitivity-adjustment signal from one or two sensitivity-adjustment keys, and to proportionally generate a sensitivity-adjustment signal for laterofrontal-emission distance sensors 40d,40s that is sent to these sensors in order to modify their observable distance.

This way, the device is well-suited for both indoor use, in which case a detection distance field closer to the user is preferred, and outdoor use, in which case a detection distance field less close to the user is preferred. Similarly, the device is well-suited for use in both a crowded environment, where a detection distance field closer to the user is preferred, and a less peopled environment, where a detection distance field less close to the user is preferred. In addition, or as an alternative, the system comprises a power switch unit 92 (Fig. 10), preferably arranged on the box of control unit 50, to switch off the laterofrontal-emission distance sensors, which can be used in the same circumstances, i.e. when moving from an indoor and/or very crowded environment, to an outdoor and/or not so peopled environment, where distance sensors 40s,40d laterofrontal-emission might be unnecessary.

Laterofrontal-emission ultrasonic distance sensors 40d,40s can be conventional sensors, for example 12 m Futurlec model US1240 sensors working at a frequency of 42 kHz, whose size is suitable for application, in particular, on a pair of eyeglasses.

Fig. 11 shows a block diagram of systems 104 and 105 of Figs. 9 and 10, each including three sensors 20, 40d, 40s. Even in this case, processing unit or control unit 50 is configured to detect a signal of the echo received from lateral distance sensors 40d,40s and from previously described base or central distance sensor 20, and is also configured to process the delays of the echoes sent by the distance sensors 20, 40d and 40s in the form of electric levels in order to control sensory stimulation devices 64d and 64s. More in detail, even in this case, control unit or processing unit 50 is also configured to determine a delay between the emission of ultrasound 2d,2s and the reception of respective echoes 3d,3s, to calculate the distance between object 1d,1s and the sensor starting from this delay, and to generate electric distance signals 5d,5s responsive to the calculated distance, which are control signals for right and left sensory stimulation devices 64d,64s, respectively. In particular, electric distance signals 5d,5s have an intensity inversely dependent on the distance of object 1d,1s from right and left lateral sensors 40d,40s, respectively.

Similarly to what has been described for devices 101, 102 and 103, also device 104 comprises user interface 90 with key 91 for switching the system on and off, preferably arranged on the common housing of one of laterofrontal-emission distance sensors 40d,40s and sensory stimulation devices 64d,64s, and also comprises a battery supply unit 95, as shown in Fig. 11.

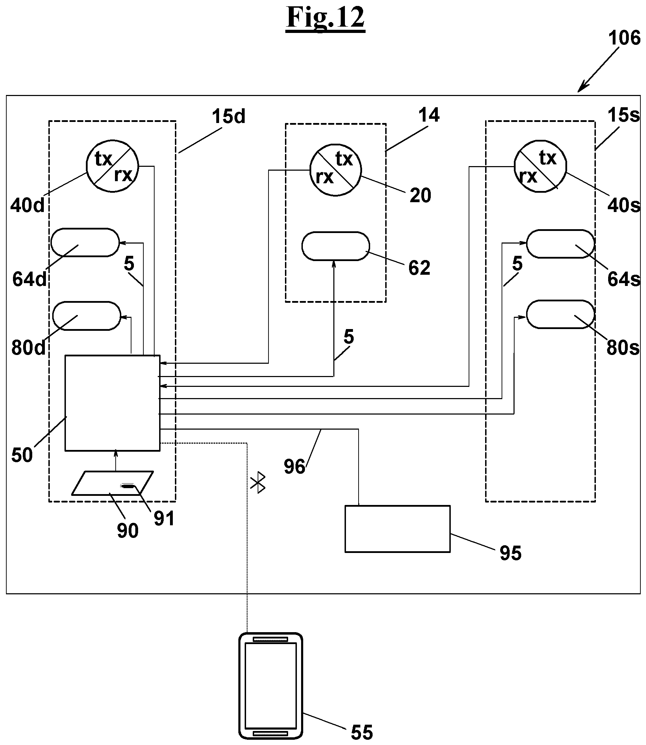

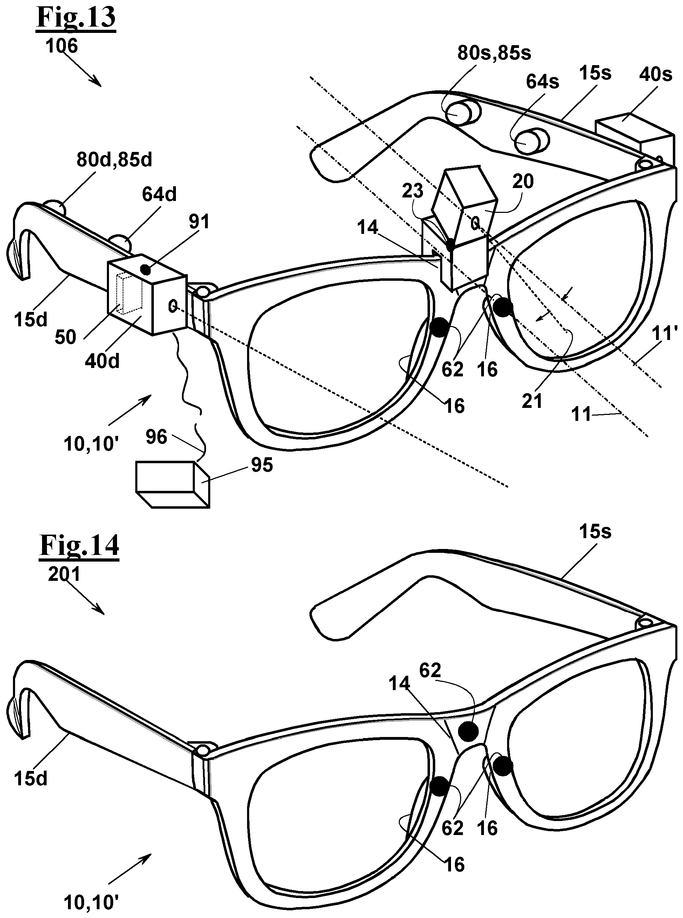

With reference to Figs. 12 and 13, a system 106 according to a further exemplary embodiment of the invention is configured for both notifying the presence of obstacles to a blind or low-vision user, and guiding such a user from a current location to a predetermined destination. To this purpose, system 106 comprises a pair of further lateral sensory stimulation devices 80d,80s arranged on support 10, in lateral positions that are different from the positions engaged by lateral sensory stimulation devices 64d,64s associated to laterofrontal-emission ultrasonic distance sensors 40d,40s, if any. In particular, if a pair of eyeglasses is used as the support or is used with a connection kit 10, further lateral sensory stimulation devices 80d,80s are arranged on an ear side region of the temples.

In this case, control unit 50 is configured to receive a direction signal from an external device like a smartphone 55 or equivalent device, for instance, via Blueetooth, or also from a smartwatch in which a guide program is resident for assisting a blind or low-vision person's displacements, wherein such a program is configured to deliver this direction signal to further lateral sensory stimulation devices 80d,80s, in order to transmit to the user a direction message responsive to the received direction signal. This way, a "navigation" mode of system 106 is performed. For instance, a turn-right or turn-left indication can be supplied by intermittently operating only one of further lateral sensory stimulation devices 80d,80s mounted to right temple 15d or left temple 15s, respectively.

Moreover, or as an alternative, the system according to the invention, for example system 105, can include a pair of "earphones" 85d,85s, preferably a pair of bone-conduction earphones, and control unit 50 is configured to receive direction signals from the outside, as described above, in order to provide the user with direction data, or is configured to generate a system status signal in order to provide the user with system-state complementary data such as the battery charge level, and is alco configured to transfer the direction or status data to earphones 85d,85s.

Fig. 14 shows a system 201 for assisting a blind or low-vision subject's displacements, comprising a support 10 that is configured to be worn by the subject, as well as a sensory stimulation device 62 configured to receive a direction signal and/or an obstacle distance signal for subject, and is also configured to transmit a sensory stimulation to the subject responsive to this signal. The support can be a support 10 configured to be mounted to a pair of eyeglasses 10', or it can be the pair of eyeglasses 10 itself. In this system, sensory stimulation device 62 is configured to be arranged integral to the pair of eyeglasses, and to transfer the sensory stimulation to the subject through the pair of eyeglasses. In particular, sensory stimulation device 62 can be arranged at frame bridge 14 and/or at frame nose pads 16 of pair of eyeglasses 10'.

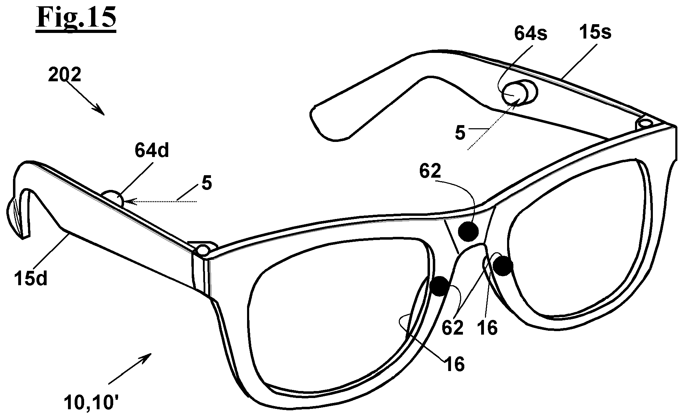

Fig. 15 shows a system 202 that also comprises lateral sensory stimulation devices 64d,64s. Sensory stimulation device 62 is preferably configured to be connected close to nose pads 16 of pair of eyeglasses 10,10', or to bridge 14 of pair of eyeglasses 10,10', while lateral sensory stimulation devices 64d,64s are preferably configured to be connected to respective temples 15d,15s of pair of eyeglasses 10,10'.

Systems 201,202 can also comprise any of the features of systems 101-106 of the invention.

## Claims

1. A system (101,102,103,104,105,106) for assisting a blind or low-vision subject's displacements (100), comprising:
- a support (10) configured to be worn by said subject (100), so as to define a horizontal reference axis (11) on said support (10), with respect to a standing position of said subject (100), and to accordingly define an upper portion (12) and a lower portion (13) of said support (10) with respect to said reference axis (11);
- an ultrasonic distance sensor (20) configured to:
- emit ultrasound (2) along an emission direction (21) of said distance sensor (20) and within an emission cone (22) of said distance sensor (20);
- receive an echo (3) of said emitted ultrasound (2) when the latter is reflected back by an object (1) present within said emission cone (22) at a detection distance (d_{R}) from said distance sensor (20);
- a control unit (50) configured to:
- receive a signal of said echo (3) from said ultrasonic distance sensor (20);
- find out a delay between the emission of said ultrasound (2) and the reception of said echo (3);
- calculate the distance of said object (1) from said ultrasonic distance sensor (20) starting from said delay;
- generate a distance signal (5) according to said calculated distance,
- a sensory stimulation device (62) configured to receive said distance signal (5) and to transmit a sensory stimulation (8) to said subject (100) responsive to said distance signal (5) if said object (1) is an obstacle,
wherein said distance sensor (20) is arranged to be mounted to said support (10) with said emission direction (21) oriented towards said lower portion (13) side of said support (10),
an adjustment means (23) is provided for adjusting an elevation angle of said emission direction (21) with respect to said reference axis (11), wherein said adjustment means (23) includes a lock device for blocking said distance sensor (20) at a predetermined emission elevation angle (α)
with respect to said support (10),
and said control unit (50) is configured to define, by said predetermined emission elevation angle (α), a predetermined distance field (6) of distances from said distance sensor (20), and therefore, proportionally, from said subject (100),
and wherein said control unit (50) is configured to detect a background echo (4) associated with a reflection of said ultrasound (2) by the ground (7), and to provide said sensory stimulation (8) to said subject (100) when a further echo (3) is detected coming from said object (1), if present within said emission cone (22), arranged as a proximity front obstacle in a low position with respect to said subject (100).

2. A system according to claim 1, wherein said control unit (50) is configured to perform, immediately after turning on the device, an initial calibration step in order to determine an average distance (d_{S}) of said ground (7) from said ultrasonic distance sensor (20), comprising:
- a plurality of steps of repeatedly reading a distance of a portion of said ground (7) included in said emission cone (22), wherein said steps of reading are repeated as long as corresponding read ground distance values are not included in a predetermined range centred about a central value (d_{S});
- storing said central value (d_{S}) as an average distance between said ground (7) and said ultrasonic distance sensor (20);
- storing a tolerance range (2ε) selected between:
- said amplitude of said range;
- a tolerance range defined in such a way to include the size of possible objects lying on said ground (7) that do not form an obstacle for the blind or low-vision subject (100).

3. A system according to claim 2, wherein said control unit (50) is configured to perform a step of detecting and notifying an obstacle (1) comprising iterative steps of:
- receiving a distance value (d_{R}) of a body (1,7) included in said emission cone (22) detected by said distance sensor (20);
- comparing said detected distance value (d_{R}) with a range [dS-ε, dS+ε] defined by said tolerance range (2ε) about said average distance (d_{S});
- if said distance detected (d_{R}) is within said range, repeating said step of receiving and said step of comparing;
- if said detected distance (d_{R}) is external to said range, generating said electric distance signal (5) as a control signal for said sensory stimulation device (62), and operating said sensory stimulation device (62) by said electric distance signal (5).

4. A system (101,102,103,104,105,106) according to claim 1, comprising a detection distance switch device of said distance sensor (20) configured to modify a detection distance range in which said detection distance (d_{R}) is detected between 0.5 metres and 3.5 metres, in particular between 1 m and 3 m.

5. A system (101,102,103,104,105,106) according to claim 1, wherein said emission elevation angle (α) is set between 15° and 75°, in particular between 30° and 75°, more in particular, between 40° and 70°.

6. A system (101,102,103,104,105,106) according to claim 1, wherein said support is selected from the group consisting of:
- a connection piece or a kit configured to be connected to a pair of eyeglasses;
- a pair of eyeglasses;
- a headset (110);
- a headpiece.

7. A system (104,105,106) according to claim 1, wherein
- said support (10) is configured to be worn symmetrically on said subject's (100) head (110),
- said distance sensor is a central-emission distance sensor (20) for detecting said object (1) as an obstacle in a central low position with respect to said subject (100),
- said system also comprises at least one pair of laterofrontal-emission ultrasonic distance sensors (40d,40s) configured to emit ultrasound (2d,2s) along respective left-side and right-side second emission directions (41d,41s) and to receive an echo (3d,3s) of said ultrasound (2d,2s) when said emitted ultrasound (2d,2s) is reflected back by an object (1d,1s) present within one of respective emission cones (42d,42s) of said laterofrontal-emission ultrasonic distance sensors (40d,40s) at a distance beyond said distance field (6) defined by said central-emission distance sensor, in order to detect obstacles (9d, 9s) arranged laterally with respect to said subject (100) at said distance beyond said distance field (6) defined by said central-emission distance sensor,
wherein said control unit (50) is configured to:
- receive a signal of said echo from said laterofrontal-emission ultrasonic distance sensors (40d,40s);
- find out a delay between the emission of said ultrasound (2',2") and the reception of said echo (3',3");
- calculate the distance of said object (1',1") from one of said laterofrontal-emission ultrasonic distance sensors (40d,40s) starting from said delay;
- generate a distance signal according to the calculated distance,
wherein said system (104, 105) also comprises at least one pair of lateral sensory stimulation devices (64d,64s) associated with a respective of said laterofrontal-emission ultrasonic distance sensors (40d,40s) and configured to receive said distance signal (5) and to transmit a sensory stimulation to said subject (100) responsive to said distance signal (5), wherein said laterofrontal-emission ultrasonic distance sensors (40d,40s) are mounted to said support (10), so as to be arranged opposite to each other with respect to said subject's (100) mid-sagittal plane when said support (10) is worn by said subject (100),
in particular, a side distance-field switch device is provided that is configured to modify said distance field that can be observed by a respective of said laterofrontal-emission ultrasonic distance sensors (40d,40s),
in particular, said system comprises a power switch unit to switch off said laterofrontal-emission ultrasonic distance sensors (40d,40s).

8. A system (104,105,106) according to claim 7, wherein said support is selected from the group consisting of:
- a support configured to be connected to a pair of eyeglasses (10');
- a pair of eyeglasses (10);
wherein said laterofrontal-emission ultrasonic distance sensors (40d,40s) and/or said lateral sensory stimulation devices (64d,64s) are configured to be connected to respective temples (15d,15s) of said pair of eyeglasses (10,10');
wherein said central-emission distance sensor (20) and/or said sensory stimulation device (62) is configured to be connected in a position between:
- a position at the bridge (14) of the frame of said pair of eyeglasses (10,10');
- a position at one of said temples (15d,15s) of said pair of eyeglasses (10,10'), in particular said central-emission distance sensor (20) is made integral to a corresponding one of said laterofrontal-emission ultrasonic distance sensors (40d,40s).

9. A system (106) according to claim 7, also comprising further lateral sensory stimulation devices (80d,80s) selected from the group consisting of:
- a pair of further lateral sensory stimulation devices (80d,80s) arranged in lateral positions different with respect to said lateral sensory stimulation devices (64d,64s) associated with said laterofrontal-emission ultrasonic distance sensors (40d,40s),
wherein said control unit (50) is configured to receive a direction signal and to transfer said direction signal to said further lateral sensory stimulation devices (80d,80s) configured to transmit a sensory stimulation to said subject (100) responsive to said direction signal;
- a pair of earphones (85d,85s), in particular bone-conduction earphones, wherein said control unit (50) is configured to generate a status signal of said system and to transfer said status signal to said earphones that are arranged to communicate said status signal of said system to said subject (100).

10. A system (102,103) according to claim 1, wherein said ultrasonic distance sensor is a first ultrasonic distance sensor (20), said emission direction is a first emission direction (21), said emission elevation angle is a first emission elevation angle (α) and said sensory stimulation device (62) is a first sensory stimulation device,
wherein the system also comprises
- a second ultrasonic distance sensor (30,40) arranged to be mounted to said support (10) with a second emission direction (31,41) selected from the group consisting of:
- a second emission direction (31) oriented towards said upper portion (12) of said support (10), according to a predetermined second emission elevation angle (β) with respect to the reference axis (11);
- a second emission direction (41) substantially parallel to the horizontal reference axis (11) of said support (10),
said second ultrasonic distance sensor (30,40) configured to emit ultrasound (2',2") along said second emission direction (31,41) and to receive an echo (3',3") of said ultrasound (2',2") when said emitted ultrasound (2',2") is reflected back by an object (1',1") present within a second emission cone (32, 42) of said second distance sensor (30,40) at a distance from said second ultrasonic distance sensor (30,40),
wherein said control unit (50) is configured to:
- receive a signal of said echo from said second ultrasonic distance sensor (30,40);
- find out a delay between the emission of said ultrasound (2',2") and the reception of said echo (3',3");
- calculate the distance of said object (1',1") from said second distance sensor (30,40) starting from said delay;
- generate a distance signal according to said calculated distance, wherein said system also comprises a second sensory stimulation device (62, 63) configured to receive said distance signal (5) and to transmit a sensory stimulation to said subject (100) responsive to said distance signal (5).

11. A system (105) according to any of the previous claims, wherein each of said distance sensors (20,30,40,40d,40s) and a respective sensory stimulation device of said sensory stimulation devices (62,63,64,64d,64s) are housed in a respective common housing (70).

12. A system according to claim 1, wherein said sensory stimulation device (62) is a tactile device, in particular a vibrotactile device.

## Patentansprüche

1. System (101, 102, 103, 104, 105, 106) zum Unterstützen der Bewegungen (100) eines blinden oder sehbehinderten Subjekts, umfassend:
- einen Träger (10), der dazu konfiguriert ist, durch das Subjekt (100) getragen zu werden, um eine horizontale Referenzachse (11) an dem Träger (10) in Bezug auf eine stehende Position des Subjekts (100) zu definieren und um dementsprechend einen oberen Abschnitt (12) und einen unteren Abschnitt (13) des Trägers (10) in Bezug auf die Referenzachse (11) zu definieren;
- einen Ultraschallabstandssensor (20), der zu Folgendem konfiguriert ist:
- Emittieren von Ultraschall (2) entlang einer Emissionsrichtung (21) des Abstandssensors (20) und innerhalb eines Emissionskegels (22) des Abstandssensors (20);
- Empfangen eines Echos (3) des emittierten Ultraschalls (2), wenn dieser durch ein Objekt (1) zurückreflektiert wird, das sich innerhalb des Emissionskegels (22) in einem Erkennungsabstand (d_{R}) von dem Abstandssensor (20) befindet;
- eine Steuerungseinheit (50), die zu Folgendem konfiguriert ist:
- Empfangen eines Signals des Echos (3) von dem Ultraschallabstandssensor (20);
- Ermitteln einer Verzögerung zwischen der Emission des Ultraschalls (2) und dem Empfang des Echos (3);
- Berechnen des Abstands des Objekts (1) von dem Ultraschallabstandssensor (20) ausgehend von der Verzögerung;
- Erzeugen eines Abstandssignals (5) gemäß dem berechneten Abstand,
- eine sensorische Stimulationsvorrichtung (62), die dazu konfiguriert ist, das Abstandssignal (5) zu empfangen und eine sensorische Stimulation (8) an das Subjekt (100) als Reaktion auf das Abstandssignal (5) zu übertragen, falls das Objekt (1) ein Hindernis ist,
wobei der Abstandssensor (20) angeordnet ist, um an dem Träger (10) montiert zu werden, wobei die Emissionsrichtung (21) zu der Seite des unteren Abschnitts (13) des Trägers (10) hin ausgerichtet ist,
ein Einstellmittel (23) zum Einstellen eines Höhenwinkels der Emissionsrichtung (21) in Bezug auf die Referenzachse (11) bereitgestellt ist, wobei das Einstellmittel (23) eine Verriegelungsvorrichtung zum Blockieren des Abstandssensors (20) bei einem vorbestimmten Emissionshöhenwinkel (α) in Bezug auf den Träger (10) enthält,
und die Steuerungseinheit (50) dazu konfiguriert ist, durch den vorbestimmten Emissionshöhenwinkel (α) ein vorbestimmtes Abstandsfeld (6) von Abständen von dem Abstandssensor (20) und damit proportional von dem Subjekt (100) zu definieren,
und wobei die Steuerungseinheit (50) dazu konfiguriert ist, ein Hintergrundecho (4) zu erkennen, das einer Reflexion des Ultraschalls (2) durch den Boden (7) zugeordnet ist, und die sensorische Stimulation (8) für das Subjekt (100) bereitzustellen, wenn ein weiteres Echo (3) erkannt wird, das von dem Objekt (1), das, falls es sich innerhalb des Emissionskegels (22) befindet, als ein vorderes Nahbereichshindernis in einer niedrigen Position in Bezug auf das Subjekt (100) angeordnet ist, kommt.

2. System gemäß Anspruch 1, wobei die Steuerungseinheit (50) dazu konfiguriert ist, unmittelbar nach dem Einschalten der Vorrichtung einen anfänglichen Kalibrierungsschritt durchzuführen, um einen durchschnittlichen Abstand (d_{S}) des Bodens (7) von dem Ultraschallabstandssensor (20) zu bestimmen, der Folgendes umfasst:
- eine Vielzahl von Schritten eines wiederholten Messens eines Abstands eines Abschnitts des Bodens (7), der in dem Emissionskegel (22) enthalten ist, wobei die Schritte des Messens wiederholt werden, solange entsprechende gemessene Bodenabstandswerte nicht in einem vorbestimmten Bereich enthalten sind, der um einen zentralen Wert (d_{S}) zentriert ist;
- Speichern des zentralen Werts (d_{S}) als einen durchschnittlichen Abstand zwischen dem Boden (7) und dem Ultraschallabstandssensor (20);
- Speichern eines Toleranzbereichs (2ε), der ausgewählt ist aus:
- der Amplitude des Bereichs;
- einem Toleranzbereich, der so definiert ist, dass er die Größe möglicher Objekte enthält, die auf dem Boden (7) liegen und kein Hindernis für das blinde oder sehbehinderte Subjekt (100) bilden.

3. System gemäß Anspruch 2, wobei die Steuerungseinheit (50) dazu konfiguriert ist, einen Schritt eines Erkennens und Meldens eines Hindernisses (1) durchzuführen, der folgende iterative Schritte umfasst:
- Empfangen eines Abstandswerts (d_{R}) eines Körpers (1, 7), der in dem Emissionskegel (22) enthalten ist und der durch den Abstandssensor (20) erkannt wird;
- Vergleichen des erkannten Abstandswerts (d_{R}) mit einem Bereich [dS-ε, dS+ε], der durch den Toleranzbereich (2ε) um den durchschnittlichen Abstand (d_{S}) definiert ist;
- falls der erkannte (d_{R}) Abstand innerhalb des Bereichs liegt, Wiederholen des Schrittes des Empfangens und des Schrittes des Vergleichens;
- falls der erkannte Abstand (d_{R}) außerhalb des Bereichs liegt, Erzeugen des elektrischen Abstandssignals (5) als ein Steuersignal für die sensorische Stimulationsvorrichtung (62) und Betreiben der sensorischen Stimulationsvorrichtung (62) durch das elektrische Abstandssignal (5).

4. System (101, 102, 103, 104, 105, 106) gemäß Anspruch 1, umfassend eine Erkennungsabstandsumschaltvorrichtung des Abstandssensors (20), die dazu konfiguriert ist, einen Erkennungsabstandsbereich, in dem der Erkennungsabstand (d_{R}) erkannt wird, zwischen 0,5 Metern und 3,5 Metern, speziell zwischen 1 m und 3 m, zu modifizieren.

5. System (101, 102, 103, 104, 105, 106) gemäß Anspruch 1, wobei der Emissionshöhenwinkel (α) zwischen 15° und 75° eingestellt ist, speziell zwischen 30° und 75°, spezieller zwischen 40° und 70°.

6. System (101, 102, 103, 104, 105, 106) gemäß Anspruch 1, wobei der Träger aus der Gruppe ausgewählt ist, die aus Folgendem besteht:
- einem Verbindungsstück oder einem Set, das dazu konfiguriert ist, mit einer Brille verbunden zu werden;
- einer Brille;
- einem Kopfhörer (110);
- einer Kopfbedeckung.

7. System (104, 105, 106) gemäß Anspruch 1, wobei
- der Träger (10) dazu konfiguriert ist, symmetrisch auf dem Kopf (110) des Subjekts (100) getragen zu werden,
- der Abstandssensor ein Zentralemissionsabstandssensor (20) zum Erkennen des Objekts (1) als ein Hindernis in einer zentralen niedrigen Position in Bezug auf das Subjekt (100) ist,
- das System auch mindestens ein Paar von Laterofrontalemissions-Ultraschallabstandssensoren (40d, 40s) umfasst, die dazu konfiguriert sind, Ultraschall (2d, 2s) entlang jeweiliger linksseitiger und rechtsseitiger zweiter Emissionsrichtungen (41d, 41s) zu emittieren und ein Echo (3d, 3s) des Ultraschalls (2d, 2s) zu empfangen, wenn der emittierte Ultraschall (2d, 2s) durch ein Objekt (1d, 1s) zurückreflektiert wird, das sich innerhalb eines der jeweiligen Emissionskegel (42d, 42s) der Laterofrontalemissions-Ultraschallabstandssensoren (40d, 40s) in einem Abstand außerhalb des durch den Zentralemissionsabstandssensor definierten Abstandsfelds (6) befindet, um Hindernisse (9d, 9s) zu erkennen, die seitlich in Bezug auf das Subjekt (100) in dem Abstand außerhalb des durch den Zentralemissionsabstandssensor definierten Abstandsfelds (6) angeordnet sind,
wobei die Steuerungseinheit (50) zu Folgendem konfiguriert ist:
- Empfangen eines Signals des Echos von den Laterofrontalemissions-Ultraschallabstandssensoren (40d, 40s);
- Ermitteln einer Verzögerung zwischen der Emission des Ultraschalls (2', 2") und dem Empfang des Echos (3', 3");
- Berechnen des Abstands des Objekts (1', 1") von einem der Laterofrontalemissions-Ultraschallabstandssensoren (40d, 40s) ausgehend von der Verzögerung;
- Erzeugen eines Abstandssignals gemäß dem berechneten Abstand,
wobei das System (104, 105) auch mindestens ein Paar lateraler sensorischer Stimulationsvorrichtungen (64d, 64s) umfasst, die einem jeweiligen der Laterofrontalemissions-Ultraschallabstandssensoren (40d, 40s) zugeordnet sind und dazu konfiguriert sind, das Abstandssignal (5) zu empfangen und eine sensorische Stimulation an das Subjekt (100) als Reaktion auf das Abstandssignal (5) zu übertragen, wobei die Laterofrontalemissions-Ultraschallabstandssensoren (40d, 40s) an dem Träger (10) montiert sind, um in Bezug auf die Medianebene des Subjekts (100) einander gegenüberliegend angeordnet zu sein, wenn der Träger (10) durch das Subjekt (100) getragen wird,
speziell eine Seitenabstandsfeldumschaltvorrichtung bereitgestellt ist, die dazu konfiguriert ist, das Abstandsfeld, das durch einen jeweiligen der Laterofrontalemissions-Ultraschallabstandssensoren (40d, 40s) beobachtet werden kann, zu modifizieren,
das System speziell eine Leistungsumschalteinheit zum Abschalten der Laterofrontalemissions-Ultraschallabstandssensoren (40d, 40s) umfasst.

8. System (104, 105, 106) gemäß Anspruch 7, wobei der Träger aus der Gruppe ausgewählt ist, die aus Folgendem besteht:
- einem Träger, der dazu konfiguriert ist, mit einer Brille (10') verbunden zu werden;
- einer Brille (10);
wobei die Laterofrontalemissions-Ultraschallabstandssensoren (40d, 40s) und/oder die lateralen sensorischen Stimulationsvorrichtungen (64d, 64s) dazu konfiguriert sind, mit jeweiligen Bügeln (15d, 15s) der Brille (10, 10') verbunden zu werden;
wobei der Zentralemissionsabstandssensor (20) und/oder die sensorische Stimulationsvorrichtung (62) dazu konfiguriert sind, in einer Position aus Folgenden verbunden zu sein:
- einer Position an dem Steg (14) der Fassung der Brille (10, 10');
- einer Position an einem der Bügel (15d, 15s) der Brille (10, 10'), wobei speziell der Zentralemissionsabstandssensor (20) einstückig mit einem entsprechenden der Laterofrontalemissions-Ultraschallabstandssensoren (40d, 40s) hergestellt ist.

9. System (106) gemäß Anspruch 7, auch weitere laterale sensorische Stimulationsvorrichtungen (80d, 80s) umfassend, die aus der Gruppe ausgewählt sind, die aus Folgendem besteht:
- einem Paar weiterer lateraler sensorischer Stimulationsvorrichtungen (80d, 80s), die in lateralen Positionen angeordnet sind, die sich in Bezug auf die lateralen sensorischen Stimulationsvorrichtungen (64d, 64s) unterscheiden, die den Laterofrontalemissions-Ultraschallabstandssensoren (40d, 40s) zugeordnet sind, wobei die Steuerungseinheit (50) dazu konfiguriert ist, ein Richtungssignal zu empfangen und das Richtungssignal an die weiteren lateralen sensorischen Stimulationsvorrichtungen (80d, 80s) zu übertragen, die dazu konfiguriert sind, eine sensorische Stimulation an das Subjekt (100) als Reaktion auf das Richtungssignal zu übertragen;
- einem Paar Ohrhörer (85d, 85s), speziell Knochenleitungsohrhörer, wobei die Steuerungseinheit (50) dazu konfiguriert ist, ein Statussignal des Systems zu erzeugen und das Statussignal an die Ohrhörer zu übertragen, die dazu angeordnet sind, das Statussignal des Systems an das Subjekt (100) zu kommunizieren.

10. System (102, 103) gemäß Anspruch 1, wobei der Ultraschallabstandssensor ein erster Ultraschallabstandssensor (20) ist, die Emissionsrichtung eine erste Emissionsrichtung (21) ist, der Emissionshöhenwinkel ein erster Emissionshöhenwinkel (α) ist und die sensorische Stimulationsvorrichtung (62) eine erste sensorische Stimulationsvorrichtung ist,
wobei das System auch Folgendes umfasst:
- einen zweiten Ultraschallabstandssensor (30, 40), der angeordnet ist, um an dem Träger (10) mit einer zweiten Emissionsrichtung (31, 41) montiert zu werden, die aus der Gruppe ausgewählt ist, bestehend aus:
- einer zweiten Emissionsrichtung (31), die zu dem oberen Abschnitt (12) des Trägers (10) hin ausgerichtet ist, gemäß einem vorbestimmten zweiten Emissionshöhenwinkel (β) in Bezug auf die Referenzachse (11);
- einer zweiten Emissionsrichtung (41), die im Wesentlichen parallel zu der horizontalen Referenzachse (11) des Trägers (10) verläuft,
wobei der zweite Ultraschallabstandssensor (30, 40) dazu konfiguriert ist, Ultraschall (2', 2") entlang der zweiten Emissionsrichtung (31, 41) zu emittieren und ein Echo (3', 3") des Ultraschalls (2', 2") zu empfangen, wenn der emittierte Ultraschall (2', 2") durch ein Objekt (1', 1") zurückreflektiert wird, das sich innerhalb eines zweiten Emissionskegels (32, 42) des zweiten Abstandssensors (30, 40) in einem Abstand von dem zweiten Ultraschallabstandssensor (30, 40) befindet,
wobei die Steuerungseinheit (50) zu Folgendem konfiguriert ist:
- Empfangen eines Signals des Echos von dem zweiten Ultraschallabstandssensor (30, 40);
- Ermitteln einer Verzögerung zwischen der Emission des Ultraschalls (2', 2") und dem Empfang des Echos (3', 3");
- Berechnen des Abstands des Objekts (1', 1") von dem zweiten Ultraschallabstandssensor (30, 40) ausgehend von der Verzögerung;
- Erzeugen eines Abstandssignals gemäß dem berechneten Abstand,
wobei das System auch eine zweite sensorische Stimulationsvorrichtung (62, 63) umfasst, die dazu konfiguriert ist, das Abstandssignal (5) zu empfangen und eine sensorische Stimulation an das Subjekt (100) als Reaktion auf das Abstandssignal (5) zu übertragen.

11. System (105) gemäß einem der vorhergehenden Ansprüche, wobei jeder der Abstandssensoren (20, 30, 40, 40d, 40s) und eine jeweilige sensorische Stimulationsvorrichtung der sensorischen Stimulationsvorrichtungen (62, 63, 64, 64d, 64s) in einem jeweiligen gemeinsamen Gehäuse (70) untergebracht sind.

12. System gemäß Anspruch 1, wobei die sensorische Stimulationsvorrichtung (62) eine taktile Vorrichtung, speziell eine vibrotaktile Vorrichtung, ist.

## Revendications

1. Système (101, 102, 103, 104, 105, 106) d'assistance aux déplacements d'un sujet aveugle ou malvoyant (100), comprenant :
- un support (10) conçu pour être porté par ledit sujet (100), de manière à définir un axe de référence horizontal (11) sur ledit support (10), par rapport à une position debout dudit sujet (100), et à définir en conséquence une partie supérieure (12) et une partie inférieure (13) dudit support (10) par rapport audit axe de référence (11) ;
- un capteur de distance à ultrasons (20) configuré pour :
- émettre un ultrason (2) dans une direction d'émission (21) dudit capteur de distance (20) et à l'intérieur d'un cône d'émission (22) dudit capteur de distance (20) ;
- recevoir un écho (3) dudit ultrason émis (2) lorsque ce dernier est réfléchi par un objet (1) présent à l'intérieur dudit cône d'émission (22) à une distance de détection (d_{R}) dudit capteur de distance (20) ;
- une unité de commande (50) configurée pour :
- recevoir un signal dudit écho (3) en provenance dudit capteur de distance à ultrasons (20) ;
- déterminer un délai entre l'émission dudit ultrason (2) et la réception dudit écho (3) ;
- calculer la distance dudit objet (1) par rapport audit capteur de distance à ultrasons (20) à partir dudit délai ;
- générer un signal de distance (5) en fonction de ladite distance calculée,
- un dispositif de stimulation sensorielle (62) configuré pour recevoir ledit signal de distance (5) et pour transmettre une stimulation sensorielle (8) audit sujet (100) en réponse audit signal de distance (5) si ledit objet (1) est un obstacle,
dans lequel ledit capteur de distance (20) est conçu pour être monté sur ledit support (10) avec ladite direction d'émission (21) orientée vers le côté de ladite partie inférieure (13) dudit support (10),
un moyen de réglage (23) est prévu pour régler un angle d'élévation de ladite direction d'émission (21) par rapport audit axe de référence (11), dans lequel ledit moyen de réglage (23) comprend un dispositif de verrouillage pour bloquer ledit capteur de distance (20) à un angle d'élévation d'émission prédéterminé (α) par rapport audit support (10),
et ladite unité de commande (50) est configurée pour définir, par ledit angle d'élévation d'émission prédéterminé (α), un champ de distance prédéterminé (6) de distances par rapport audit capteur de distance (20), et donc, proportionnellement, par rapport audit sujet (100), et dans lequel
ladite unité de commande (50) est configurée pour détecter un écho de fond (4) associé à une réflexion dudit ultrason (2) par le sol (7), et pour fournir ladite stimulation sensorielle (8) audit sujet (100) lorsqu'un écho supplémentaire (3) est détecté en provenance dudit objet (1), s'il est présent à l'intérieur dudit cône d'émission (22), agencé comme un obstacle de proximité avant en position basse par rapport audit sujet (100).

2. Système selon la revendication 1, dans lequel ladite unité de commande (50) est configurée pour effectuer, immédiatement après la mise sous tension du dispositif, une étape d'étalonnage initiale afin de déterminer une distance moyenne (d_{S}) dudit sol (7) par rapport audit capteur de distance à ultrasons (20), comprenant :
- une pluralité d'étapes de lecture répétée d'une distance d'une partie dudit sol (7) compris dans ledit cône d'émission (22), dans lequel lesdites étapes de lecture sont répétées tant que les valeurs de distance au sol lues correspondantes ne sont pas comprises dans une plage prédéterminée centrée sur une valeur centrale (d_{S}) ;
- le stockage de ladite valeur centrale (d_{S}) en tant que distance moyenne entre ledit sol (7) et ledit capteur de distance à ultrasons (20) ;
- le stockage d'une plage de tolérance (2ε) choisie entre :
- ladite amplitude de ladite plage ;
- une plage de tolérance définie de manière à comprendre la taille des objets possibles reposant sur ledit sol (7) qui ne constituent pas un obstacle pour le sujet aveugle ou malvoyant (100).

3. Système selon la revendication 2, dans lequel ladite unité de commande (50) est configurée pour effectuer une étape de détection et de notification d'un obstacle (1) comprenant des étapes itératives de :
- réception d'une valeur de distance (d_{R}) d'un corps (1,7) compris dans ledit cône d'émission (22) détectée par ledit capteur de distance (20) ;
- comparaison de ladite valeur de distance détectée (d_{R}) à une plage [dS-ε, dS+ε] définie par ladite plage de tolérance (2ε) autour de ladite distance moyenne (d_{S}) ;
- si ladite distance détectée (d_{R}) se trouve dans ladite plage, répétition de ladite étape de réception et de ladite étape de comparaison ;
- si ladite distance détectée (d_{R}) se trouve à l'extérieur de ladite plage, génération dudit signal de distance électrique (5) en tant que signal de commande pour ledit dispositif de stimulation sensorielle (62), et fonctionnement dudit dispositif de stimulation sensorielle (62) par ledit signal de distance électrique (5).

4. Système (101, 102, 103, 104, 105, 106) selon la revendication 1, comprenant un dispositif de commutation de distance de détection dudit capteur de distance (20) configuré pour modifier une plage de distance de détection dans laquelle ladite distance de détection (d_{R}) est détectée entre 0,5 mètre et 3,5 mètres, en particulier entre 1 mètre et 3 mètres.

5. Système (101, 102, 103, 104, 105, 106) selon la revendication 1, dans lequel ledit angle d'élévation d'émission (α) est défini entre 15° et 75°, en particulier entre 30° et 75°, plus particulièrement entre 40° et 70°^{.}

6. Système (101, 102, 103, 104, 105, 106) selon la revendication 1, dans lequel ledit support est choisi dans le groupe constitué par :
- une pièce de raccordement ou un kit configuré pour être relié à une paire de lunettes ;
- une paire de lunettes ;
- un micro-casque (110) ;
- un casque.

7. Système (104, 105, 106) selon la revendication 1, dans lequel
- ledit support (10) est conçu pour être porté de manière symétrique sur la tête (110) dudit sujet (100),
- ledit capteur de distance est un capteur de distance à émission centrale (20) pour détecter ledit objet (1) en tant qu'obstacle dans une position centrale basse par rapport audit sujet (100),
- ledit système comprend également au moins une paire de capteurs de distance à ultrasons à émission latéro-frontale (40d, 40s) configurés pour émettre un ultrason (2d, 2s) dans des secondes directions d'émission respectives côté gauche et côté droit (41d ,41s) et pour recevoir un écho (3d, 3s) dudit ultrason (2d, 2s) lorsque ledit ultrason émis (2d, 2s) est réfléchi par un objet (1d, 1s) présent à l'intérieur de l'un des cônes d'émission respectifs (42d, 42s) desdits capteurs de distance à ultrasons à émission latéro-frontale (40d ,40s) à une distance au-delà dudit champ de distance (6) défini par ledit capteur de distance à émission centrale, afin de détecter des obstacles (9d, 9s) disposés latéralement par rapport audit sujet (100) à ladite distance au-delà dudit champ de distance (6) défini par ledit capteur de distance à émission centrale,
dans lequel ladite unité de commande (50) est configurée pour :
- recevoir un signal dudit écho en provenance desdits capteurs de distance à ultrasons à émission latéro-frontale (40d, 40s) ;
- déterminer un délai entre l'émission dudit ultrason (2', 2") et la réception dudit écho (3', 3'') ;
- calculer la distance dudit objet (1',1") par rapport à l'un desdits capteurs de distance à ultrasons à émission latéro-frontale (40d, 40s) à partir dudit délai ;
- générer un signal de distance selon la distance calculée, dans lequel ledit système (104, 105) comprend également au moins une paire de dispositifs de stimulation sensorielle latéraux (64d, 64s) associés à l'un respectif desdits capteurs de distance à ultrasons à émission latéro-frontale (40d, 40s) et configurés pour recevoir ledit signal de distance (5) et pour transmettre une stimulation sensorielle audit sujet (100) en réponse audit signal de distance (5), dans lequel lesdits capteurs de distance à ultrasons à émission latéro-frontale (40d, 40s) sont montés sur ledit support (10), de manière à être disposés à l'opposé l'un de l'autre par rapport au plan sagittal moyen dudit sujet (100) lorsque ledit support (10) est porté par ledit sujet (100),
en particulier, un dispositif de commutation de champ de distance latéral est fourni qui est configuré pour modifier ledit champ de distance qui peut être observé par l'un respectif desdits capteurs de distance à ultrasons à émission latéro-frontale (40d, 40s),
en particulier, ledit système comprend une unité de commutation d'alimentation pour éteindre lesdits capteurs de distance à ultrasons à émission latéro-frontale (40d, 40s).

8. Système (104, 105, 106) selon la revendication 7, dans lequel ledit support est choisi dans le groupe constitué de :
- un support configuré pour être relié à une paire de lunettes (10') ;
- une paire de lunettes (10) ;
dans lequel lesdits capteurs de distance à ultrasons à émission latéro-frontale (40d, 40s) et/ou lesdits dispositifs de stimulation sensorielle latéraux (64d, 64s) sont configurés pour être connectés aux branches respectives (15d, 15s) de ladite paire de lunettes (10, 10') ;
dans lequel ledit capteur de distance à émission centrale (20) et/ou ledit dispositif de stimulation sensorielle (62) est configuré pour être connecté dans une position entre :
- une position au niveau du pont (14) de la monture de ladite paire de lunettes (10, 10') ;
- une position à l'une desdites branches (15d, 15s) de ladite paire de lunettes (10, 10'), en particulier ledit capteur de distance à émission centrale (20) est rendu solidaire de l'un capteur correspondant desdits capteurs de distance à ultrasons à émission latéro-frontale (40d, 40s).

9. Système (106) selon la revendication 7, comprenant également d'autres dispositifs de stimulation sensorielle latérale (80d, 80s) choisis dans le groupe constitué par :
- une paire de dispositifs de stimulation sensorielle latéraux supplémentaires (80d, 80s) agencés dans des positions latérales différentes par rapport auxdits dispositifs de stimulation sensorielle latérale (64d, 64s) associés auxdits capteurs de distance à ultrasons à émission latéro-frontale (40d, 40s),
dans lequel ladite unité de commande (50) est configurée pour recevoir un signal de direction et pour transférer ledit signal de direction auxdits dispositifs de stimulation sensorielle latéraux supplémentaires (80d, 80s) configurés pour transmettre une stimulation sensorielle audit sujet (100) en réponse audit signal de direction ;
- une paire d'écouteurs (85d, 85s), en particulier des écouteurs à conduction osseuse, dans lequel ladite unité de commande (50) est configurée pour générer un signal d'état dudit système et transférer ledit signal d'état auxdits écouteurs qui sont agencés pour communiquer ledit signal d'état dudit système audit sujet (100).

10. Système (102, 103) selon la revendication 1, dans lequel ledit capteur de distance à ultrasons est un premier capteur de distance à ultrasons (20), ladite direction d'émission est une première direction d'émission (21), ledit angle d'élévation d'émission est un premier angle d'élévation d'émission (α) et ledit dispositif de stimulation sensorielle (62) est un premier dispositif de stimulation sensorielle, dans lequel le système comprend également
- un second capteur de distance à ultrasons (30, 40) conçu pour être monté sur ledit support (10) avec une seconde direction d'émission (31, 41) choisie dans le groupe constitué de :
- une seconde direction d'émission (31) orientée vers ladite partie supérieure (12) dudit support (10), selon un second angle d'élévation d'émission prédéterminé (β) par rapport à l'axe de référence (11) ;
- une seconde direction d'émission (41) sensiblement parallèle à l'axe de référence horizontal (11) dudit support (10),
ledit second capteur de distance à ultrasons (30, 40) configuré pour émettre un ultrason (2', 2") dans ladite seconde direction d'émission (31, 41) et pour recevoir un écho (3', 3'') dudit ultrason (2', 2") lorsque ledit ultrason émis (2', 2") est réfléchi par un objet (1', 1") présent à l'intérieur d'un second cône d'émission (32, 42) dudit second capteur de distance (30, 40) à une distance dudit second capteur de distance à ultrasons (30, 40),
dans lequel ladite unité de commande (50) est configurée pour :
- recevoir un signal dudit écho en provenance dudit second capteur de distance à ultrasons (30, 40) ;
- déterminer un délai entre l'émission dudit ultrason (2', 2") et la réception dudit écho (3', 3'') ;
- calculer la distance dudit objet (1', 1") par rapport audit second capteur de distance (30, 40) à partir dudit délai ;
- générer un signal de distance en fonction de ladite distance calculée,
dans lequel ledit système comprend également un second dispositif de stimulation sensorielle (62, 63) configuré pour recevoir ledit signal de distance (5) et pour transmettre une stimulation sensorielle audit sujet (100) en réponse audit signal de distance (5).

11. Système (105) selon l'une quelconque des revendications précédentes, dans lequel chacun desdits capteurs de distance (20, 30, 40, 40d, 40s) et un dispositif de stimulation sensorielle respectif desdits dispositifs de stimulation sensorielle (62, 63, 64, 64d, 64s) sont logés dans un boîtier commun respectif (70).

12. Système selon la revendication 1, dans lequel ledit dispositif de stimulation sensorielle (62) est un dispositif tactile, en particulier un dispositif vibrotactile.
